# EUROPEAN PATENT APPLICATION

(11) **EP 4 653 917 A1**
(43) Date of publication of application: **26.11.2025**
(21) Application number: 24177767.1
(22) Date of filing: 23.05.2024
(51) Int. Cl.: G01S 13/10, G01S 13/26, G01S 7/282, G01S 7/35

(54) **FMCW RADAR DEVICE, APPARATUS COMPRISING AN FMCW RADAR DEVICE AND METHOD FOR A FMCW RADAR DEVICE**

(71) Applicant: Infineon Technologies AG, 85579 Neubiberg (DE)
(72) Inventor: ANASTASOV, Ljudmil, 81479 München (DE)
(74) Representative: 2SPL Patentanwälte PartG mbB

(57) **Abstract**

Provided is a Frequency Modulated Continuous Wave (FMCW) radar device. The FMCW radar device includes a Power Amplifier (PA) configured to amplify a transmit signal comprising a sequence of frequency-modulated pulses. Additionally, the FMCW radar device includes control circuitry configured to control the PA to vary an amplitude of the transmit signal. The control circuitry is configured to control the PA to cause the sequence of frequency-modulated pulses to exhibit at least one of the following characteristics: 1) each frequency-modulated pulse of the sequence of frequency-modulated pulses exhibits a non-rectangular amplitude profile; and 2) the respective maximum amplitudes of the frequency-modulated pulses vary over the sequence of frequency-modulated pulses.

## Description

### Field

The present disclosure relates to Frequency Modulated Continuous Wave (FMCW) radar. In particular, examples of the present disclosure relate to a FMCW radar device, an apparatus comprising an FMCW radar device and a method for a FMCW radar device.

### Background

In conventional FMCW radar data processing, a large portion of data contained in the received radar signals ends up being discarded, for instance due to the absence of significance of the corresponding data with respect to the scene which is observed. Thus, a sizeable portion of the electrical power involved in the emission of the radar signals, typically on the level of one or more Power Amplifier (PA), is used for the generation of signals which find no subsequent use.

Hence, there may be a demand for improved FMCW radar.

### Summary

This demand is met by the subject-matter of the independent claims. Advantageous embodiments are addressed by the dependent claims.

According to a first aspect, the present disclosure provides a FMCW radar device. The FMCW radar device comprises a PA configured to amplify a transmit signal comprising a sequence of frequency-modulated pulses. Additionally, the FMCW radar device comprises control circuitry configured to control the PA to vary an amplitude of the transmit signal. The control circuitry is configured to control the PA to cause the sequence of frequency-modulated pulses to exhibit at least one of the following characteristics: 1) each frequency-modulated pulse of the sequence of frequency-modulated pulses exhibits a non-rectangular amplitude profile; and 2) the respective maximum amplitudes of the frequency-modulated pulses vary over the sequence of frequency-modulated pulses.

According to a second aspect, the present disclosure provides an apparatus comprising a FMCW radar device according to the first aspect.

According to a third aspect, the present disclosure provides a method for a FMCW radar device comprising a PA. The method comprises controlling the PA to vary an amplitude of a transmit signal amplified by the PA. The transmit signal comprises a sequence of frequency-modulated pulses. The PA is controlled to cause the sequence of frequency-modulated pulses to exhibit at least one of the following characteristics: 1) each frequency-modulated pulse of the sequence of frequency-modulated pulses exhibits a non-rectangular amplitude profile; and 2) the respective maximum amplitudes of the frequency-modulated pulses vary over the sequence of frequency-modulated pulses.

According to a fourth aspect, the present disclosure provides a non-transitory machine-readable medium having stored thereon a program having a program code for performing the method according to the third aspect, when the program is executed on a processor or a programmable hardware.

According to a fifth aspect, the present disclosure provides a program having a program code for performing the method according to the third aspect, when the program is executed on a processor or a programmable hardware.

### Brief description of the Figures

Some examples of apparatuses and/or methods will be described in the following by way of example only, and with reference to the accompanying figures, in which
Fig. 1 illustrates a first example of a FMCW radar device;
Fig. 2 illustrates exemplary signal properties;
Fig. 3 illustrates an exemplary power distribution;
Fig. 4 illustrates a second example of a FMCW radar device;
Fig. 5 illustrates an exemplary apparatus; and
Fig. 6 illustrates a flowchart of an example of a method for a FMCW radar device comprising a PA.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

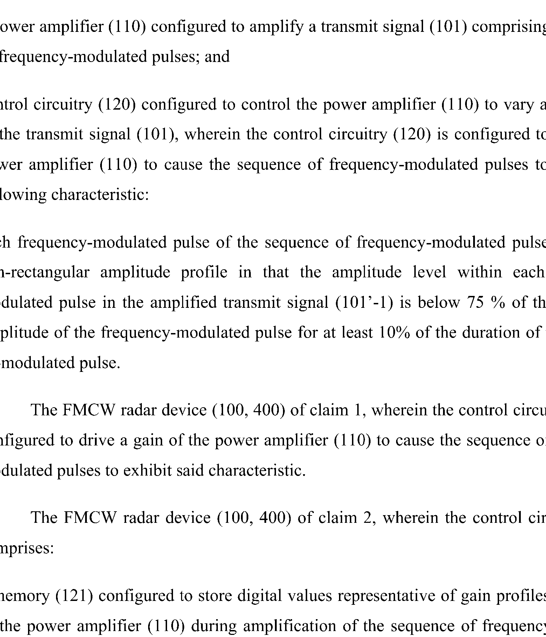

Fig. 1 schematically illustrates a FMCW radar device 100. The FMCW radar device 100 comprises a PA 110. For example, the PA 110 may be part of a transmitter or a transmit path of the FMCW radar device 100.

The PA 110 is configured to receive and amplify a transmit signal 101. The transmit signal 101 is an FMCW signal comprising a sequence (series, succession, plurality) of frequency-modulated pulses. In other words, a frequency of the pulses in the sequence of frequency-modulated pulses varies over time.

The transmit signal 101 itself may, e.g., be generated by further components of the FMCW radar device 100's transmitter or transmit path. For example, the FMCW radar device 100's transmitter or transmit path may comprise signal generation circuitry (not illustrated in Fig. 1) such as a frequency synthesizer and a modulator for generating the transmit signal 101. The frequency synthesizer (e.g., a Phase-Locked Loop, PLL, or a Voltage-Controlled Oscillator, VCO) may, e.g., be configured to generate a continuous wave signal. The modulator may be configured to generate the transmit signal 101 by frequency modulating the continuous wave signal based on a target frequency modulation for the pulses in the sequence of frequency-modulated pulses. The target frequency modulation for the pulses in the sequence of frequency-modulated pulses may be manifold. For example, linear frequency modulation, sawtooth frequency modulation, triangle frequency modulation, stepped frequency modulation or chirp modulation may be used. However, the present disclosure is not limited thereto. Other types of frequency modulation may be used as well. Further, it is to be noted that other hardware may be used to generate the transmit signal 101.

The amplified transmit signal output by the PA 110 is labeled with the reference sign 101'.

A frequency of the continuous wave signal provided by the frequency synthesizer may, e.g., be at least 300 MHz and at maximum 300 GHz. In other words, a carrier frequency of the transmit signal 101 and, hence, the amplified transmit signal 101' may be at least 300 MHz and at maximum 300 GHz. For example, the frequency may be 24 GHz, 60 GHz or 77 GHz.

The FMCW radar device 100 comprises control circuitry 120. The control circuitry 120 is coupled to the PA 11 0 and configured to control operation of the PA 11 0. In particular, the control circuitry 120 is configured to control the PA 110 to vary the amplitude of the transmit signal 101 by (during) amplification of the transmit signal 101. In other words, the control circuitry 120 is configured to control the PA 110 to shape the amplitude of the amplified transmit signal 101' by amplification of the transmit signal 101. The control circuitry 120 is configured to control the PA 110 to cause the sequence of frequency-modulated pulses to exhibit at least one of the following characteristics in the amplified transmit signal 101' output by the PA 110:
1) each frequency-modulated pulse of the sequence of frequency-modulated pulses exhibits a non-rectangular amplitude profile; and
2) the respective maximum amplitudes of the frequency-modulated pulses vary over the sequence of frequency-modulated pulses.

The amplitude profile of a frequency-modulated pulse is the progression or variation of the shape or pattern of the frequency-modulated pulse's amplitude over time. The maximum amplitude of a frequency-modulated pulse denotes the maximum signal level or magnitude (i.e., the signal or magnitude peak) achieved by the frequency-modulated pulse.

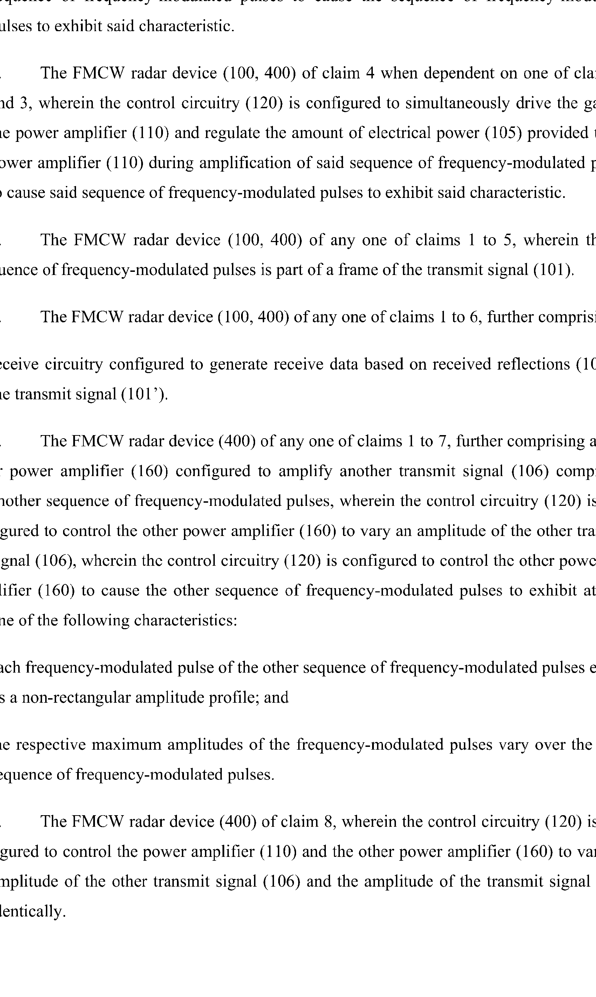

The variation of the amplitude of the transmit signal 101's amplitude during amplification of the transmit signal 101 is further illustrated in Fig. 2. In the example of Fig. 2, the sequence of frequency-modulated pulses comprises 1024 frequency-modulated pulses. However, it is to be noted that the number of pulses in Fig. 2 is selected for illustrative purposes. The present technology is not limited thereto. Any other number N > 2 of pulses (e.g., 64, 128, 256, 512, 2048, etc.) may be used instead.

Subfigure (a) of Fig. 2 illustrates an exemplary frequency modulation of the 1024 frequency-modulated pulses. The 1024 frequency-modulated pulses are frequency ramps. However, as indicated above, other types of frequency modulation may be used instead. Subfigure (b) of Fig. 2 illustrates exemplary amplitude profiles 210 of the 1024 frequency-modulated pulses in the transmit signal 101 input to the PA 110 for amplification. In the example of subfigure 2(b), the 1024 frequency-modulated pulses of the transmit signal 101 shown in full lines are rectangular pulses of identical amplitude used in conventional FMCW radar. However, it is to be noted that the present disclosure is not limited thereto.

Further illustrated in subfigure (b) of Fig. 2 in dotted lines is a first variant of the amplified transmit signal output by the PA 110 according to the present disclosure. The first variant of the amplified transmit signal output by the PA 110 is labelled with the reference sign 101'-1. In this example, the control circuitry 120 is configured to control the PA 110 such that the sequence of frequency-modulated pulses in the amplified transmit signal 101'-1 output by the PA 110 exhibits the above characteristic 1). In this case, each of the 1024 frequency-modulated pulses in the amplified transmit signal 101'-1 exhibits a non-rectangular amplitude profile 220. In other words, the amplitude of each frequency-modulated pulse in the sequence of frequency-modulated pulses in the amplified transmit signal 101'-1 varies over time (e.g., by at least 5 %, 10 %, 15 % or 25 % of the maximum amplitude of the respective frequency-modulated pulse). For example, the amplitude profile 220 of each frequency-modulated pulse in the amplified transmit signal 101'-1 may exhibit a variation which occurs over a duration of the corresponding frequency-modulated pulse superior to 10 %, 15 %, 20% or 25 % of a duration of the frequency-modulated pulses. In other words, the amplitude variation of the respective modulated pulse in the amplified transmit signal 101'-1 covers at least 10 %, 15 %, 20% or 25 % of the duration of the frequency-modulated pulse. Alternatively or additionally, the amplitude level within each frequency-modulated pulse in the amplified transmit signal 101'-1 may be below 75 %, 70 %, 65 %, 60 %, 55 % or 50% of the maximum amplitude of the frequency-modulated pulse for at least 10%, 15 %, 20 % or 25 % of the duration of the frequency-modulated pulse. Further alternatively or additionally, the average value of the amplitude over each frequency-modulated pulse in the amplified transmit signal 101'-1 may be below 90%, 85 %, 80 % or 75 % of the maximum value of the amplitude over the frequency-modulated pulse.

In subfigure (b) of Fig. 2, the amplitude profile 220 of each frequency-modulated pulse in the amplified transmit signal 101'-1 is symmetrical with respect to a center time of the considered frequency-modulated pulse. In other words, a shape of the amplitude of each of the frequency-modulated pulses in the amplified transmit signal 101'-1 is symmetrical when observed from the beginning to the end of the respective frequency-modulated pulse. In an example, the amplitude profile 220 of each frequency-modulated pulse in the amplified transmit signal 101'-1 comprises or consists of a strictly monotonical increase followed by a strictly monotonical decrease over time. In other words, the amplitude of each of the frequency-modulated pulses in the amplified transmit signal 101'-1 first monotonically increases and then monotonically decreases over time, or shows such a sequence. However, it is to be noted that the present disclosure is not limited thereto. The amplitudes of the frequency-modulated pulses in the amplified transmit signal 101'-1 do not have to be symmetrical. According to examples, the amplitudes of the frequency-modulated pulses in the amplified transmit signal 101'-1 may exhibit amplitude profiles having the same or similar shapes as window functions used in digital signal processing for FMCW radar. For example, the amplitudes of the frequency-modulated pulses in the amplified transmit signal 101'-1 may exhibit amplitude profiles having the shape of a Hann (Hanning) window, a Hamming window, a Kaiser window, a Blackman Window, a flat top window, etc. It is to be noted that the amplitudes of the frequency-modulated pulses in the amplified transmit signal 101'-1 may generally exhibit any non-rectangular amplitude profile.

Subfigure (c) of Fig. 2 illustrates in full lines a second variant of the amplified transmit signal output by the PA 110 according to the present disclosure. The second variant of the amplified transmit signal output by the PA 110 is labelled with the reference sign 101'-2. In this example, the control circuitry 120 is configured to control the PA 110 such that the sequence of frequency-modulated pulses in the amplified transmit signal 101'-2 output by the PA 110 exhibits the above characteristic 2). The maximum amplitudes 230-1, ..., 230-1024 of the frequency-modulated pulses vary over the sequence of the 1024 frequency-modulated pulses. In other words, the respective maximum amplitudes 230-1, ..., 230-1024 of the frequency-modulated pulses varies over the sequence of the 1024 frequency-modulated pulses (e.g., by at least 5 %, 10 %, 15 % or 25 % of the maximum amplitude in the sequence of frequency-modulated pulses). In still other words, the maximum amplitudes 230-1, ..., 230-1024 of the frequency-modulated pulses are not constant (identical) over the sequence of the 1024 frequency-modulated pulses. According to examples, the maximum amplitudes 230-1, ..., 230-1024 of the frequency-modulated pulses exhibit a maximum value at one or more of the frequency-modulated pulses, and the maximum amplitudes of the remaining frequency-modulated pulses are all smaller than this maximum value. For example, the average value of the maximum amplitudes 230-1, ..., 230-1024 across the sequence of frequency-modulated pulses in the amplified transmit signal 101'-2 may be below 90 %, 85 %, 80 % or 75 % of the maximum value (of the maximum amplitudes) in the sequence. Alternatively or additionally, the maximum amplitudes 230-1, ..., 230-1024 of at least 5 %, 10%, 15 %, 20 % or 25 % of the frequency-modulated pulses in the sequence of frequency-modulated pulses in the amplified transmit signal 101'-2 may be below 50 % of the of the maximum value (of the maximum amplitudes) in the sequence.

In subfigure (c) of Fig. 2, the maximum amplitudes 230-1, ..., 230-1024 of the frequency-modulated pulses in the amplified transmit signal 101'-2 exhibit a variation profile over the sequence of frequency-modulated pulses which is symmetrical with respect to a center time of the sequence of frequency-modulated pulses. In other words, a course (progression) of the maximum amplitude is symmetrical when observed from the beginning to the end of the sequence of frequency-modulated pulses in the amplified transmit signal 101'-2. In an example, the variation profile comprises or consists of a strictly monotonical increase of the maximum amplitudes of the frequency-modulated pulses followed by a strictly monotonical decrease of the maximum amplitudes of the frequency-modulated pulses over the sequence of frequency-modulated pulses in the amplified transmit signal 101'-2. In other words, the maximum amplitude first monotonically increases and then monotonically decreases over the sequence of frequency-modulated pulses in the amplified transmit signal 101'-2, or exhibit such a progression over at least part of the sequence of pulses. However, it is to be noted that the present disclosure is not limited thereto. The variation profile of the maximum amplitudes 230-1, ..., 230-1024 of the frequency-modulated pulses in the amplified transmit signal 101'-2 does not have to be symmetrical. According to examples, the variation profile of the maximum amplitudes 230-1, ..., 230-1024 of the frequency-modulated pulses in the amplified transmit signal 10 1'-2 may have the same or a similar shape as window functions used in digital signal processing for FMCW radar. For example, the variation profile of the maximum amplitudes 230-1, ..., 230-1024 of the frequency-modulated pulses in the amplified transmit signal 101'-2 may have the shape of a Hann (Hanning) window, a Hamming window, a Kaiser window, a Blackman Window, a flat top window, etc. It is to be noted that the variation profile of the maximum amplitudes of the frequency-modulated pulses in the amplified transmit signal 101'-2 may generally be any non-constant profile.

Further illustrated in subfigure (c) of Fig. 2 in dotted lines is a third variant of the amplified transmit signal output by the PA 110 according to the present disclosure. The third variant of the amplified transmit signal output by the PA 110 is labelled with the reference sign 101'-3. In this example, the control circuitry 120 is configured to control the PA 110 such that the sequence of frequency-modulated pulses in the amplified transmit signal 101'-3 output by the PA 110 exhibits both of the above characteristics 1) and 2). In this case, each of the 1024 frequency-modulated pulses in the amplified transmit signal 101'-3 exhibits a non-rectangular amplitude profile, as described above in reference to subfigure 2(b). Furthermore, the maximum amplitudes 230-1, ..., 230-1024 of the frequency-modulated pulses vary over the sequence of the 1024 frequency-modulated pulses, as described previously in reference to subfigure 2(c).

Compared to conventional FMCW radars, controlling the PA 110 to cause the sequence of frequency-modulated pulses to exhibit at least one of the above characteristics 1) and 2) in the amplified transmit signal 101' output by the PA 110 is beneficial for various reasons. Firstly, controlling the PA 110 as proposed herein allows to reduce the power consumption of the PA 110 compared to conventional FMCW radar. Instead of discarding part of the transmit signal in the signal processing chain at the receive side like in conventional FMCW radar, the proposed technology allows to not transmit it altogether or to transmit it with reduced (average) power. According to the proposed technology, amplitude modulation is performed on each FMCW radar pulse of the sequence of frequency-modulated pulses, especially on the sensing part of the pulse. As less power is consumed by the PA 110, the heat generation by the PA 110 may be reduced compared to conventional FMCW radar. Furthermore, transients caused by the power supply for the PA 110 may be reduced due to softer on/off switching compared to conventional FMCW radar.

As illustrated in Fig. 1, the FMCW radar device 100 may further comprise a transmit antenna 130 coupled to the PA 110. The PA 110 may be configured to supply the amplified transmit signal 101' to the transmit antenna 130. The transmit antenna 130 may be configured to radiate (emit) the amplified transmit signal 101' to the environment (i.e., the surrounding of the FMCW radar device 100)

A target 199 in the environment may reflect at least part of the amplified transmit signal 101' back to the FMCW radar device 100.

The reflections 102 of the amplified transmit signal 101' may, e.g., be received by a receive antenna 140 of the FMCW radar device 100. The antennas 130 and 140 may be co-located at the same physical location or be located separate from each other at different locations. In other words, the antennas 130 and 140 may be a single monostatic antenna or be bistatic antennas. Accordingly, the FMCW radar device 100 may be a monostatic or bistatic FMCW radar device.

The FMCW radar device 100 may further comprise receive circuitry 150 coupled to the receive antenna 140. The receive circuitry 150 may be configured to generate (e.g., digital) receive data 103 based on the received reflections 102. The receive circuitry 150 may comprise analog signal processing circuitry for analog signal processing of the received reflections 102. For example, the analog signal processing circuitry may comprise a radio frequency receiver and analog front-end circuitry for (e.g., low-noise) amplifying the received reflections 102, mixing the received reflections 102 down to the baseband or an intermediate frequency and analog filtering of the received reflections 102. The receive circuitry 150 may further comprise an Analog-to-Digital Converter (ADC) for converting one or more analog signals generated by the analog signal processing circuitry based on the received reflections 102 to one or more digital signals. Additionally, the receive circuitry 150 may comprise a digital front-end circuitry for digital processing (e.g., filtering) of the one or more digital signals. The data output by the digital front-end circuitry may be the receive data 103. In some examples, the receive circuitry 150 may further comprise digital signal processing circuitry for further processing the data output by the digital front-end circuitry. For example, the digital signal processing circuitry may be configured to perform filtering such as windowing and Fourier analysis on the data output by the digital front-end circuitry. In these examples, the data output by the digital signal processing circuitry may be the receive data 103.

In other examples, the receive antenna 140 and the receive circuitry 150 may be external to the FMCW radar device 100. That is, the FMCW radar device 100 needs not comprise the receive antenna 140 and the receive circuitry 150.

The sequence of frequency-modulated pulses in the transmit signal 101 and/or the amplified transmit signal 101' may, e.g., be part of a frame of the transmit signal 101 and/or the amplified transmit signal 101'. A frame includes the transmission of multiple frequency-modulated pulses such as the above described sequence of frequency-modulated pulses, reception of the echoes or reflections from one or more targets such as the target 199, and processing of the received signal(s) to generate the receive data 103 (e.g., by the receive circuitry 150). Various information such as target range, velocity, and other characteristics may be extracted from the receive data 103. In other words, the sequence of frequency-modulated pulses in the transmit signal 101 and/or the amplified transmit signal 101' may be part of or be for a single (i.e., the same) radar measurement of the FMCW radar device 100.

The control circuitry 120 may control the PA 110 in various ways to cause the sequence of frequency-modulated pulses in the amplified transmit signal 101' to exhibit at least one of the above characteristics 1) and 2). In the following two exemplary techniques will be described in greater detail. However, it is to be noted that the present disclosure is not limited thereto.

According to examples, the control circuitry 120 may be configured to drive a gain of the PA 110 to cause the sequence of frequency-modulated pulses in the amplified transmit signal 101' to exhibit at least one of the above characteristics 1) and 2). The gain of the PA 110 refers to the ratio of the output power to the input power. It indicates how much the PA 110 amplifies the input transmit signal 101. By varying the gain of the PA 110, the amplitudes of the pulses in sequence of frequency-modulated pulses in the transmit signal 101 may be modulated such that the sequence of frequency-modulated pulses in the amplified transmit signal 101' exhibits at least one of the above characteristics 1) and 2).

For example, the control circuitry 120 may comprise a memory 121 configured to store digital values representative of gain profiles of the gain of the PA 110 during amplification of the sequence of frequency-modulated pulses in the transmit signal 101. The gain profiles represent a target progression or variation of the gain of the PA 110 over time during amplification of the sequence of frequency-modulated pulses in the transmit signal 101 to generate the frequency-modulated pulses with the desired amplitude profiles. The memory 121 may be configured to store a plurality of different sets of gain profiles for different target amplitude modulations of the sequence of frequency-modulated pulses in the transmit signal 101. The control circuitry 120 may further comprise driving circuitry 122 coupled to the memory 121. The driving circuitry 122 may be configured to read the digital values from the memory 121 and generate a driving signal 104 for driving the gain of the PA 110 based on said digital values. For example, the driving signal 104 may be a bias voltage or current for adjusting the operating point and, hence, the linearity, of the PA 110. By adjusting the operating point of the PA 110, the gain of the PA 110 may be driven (adjusted) as desired.

According to examples, the memory 121 may be a Random Access Memory (RAM) and the gain profiles may be target bias voltages or currents to be applied to the PA 110 for driving the gain of the PA 110. The driving circuitry 122 may, e.g., be or comprise a Digital-to-Analog Converter (DAC). However, it is to be noted that the present disclosure is not limited to the aforementioned implementation of the memory 121 and the driving circuitry 122. Other types of memories and circuitry for converting digital values into analog signals may be used instead.

In some examples, the control circuitry 120 may comprise power regulation circuitry 123. The power regulation circuitry 123 may be configured to regulate an amount of electrical power 105 provided to the PA 110 during amplification of the sequence of frequency-modulated pulses in the transmit signal 101 to cause the sequence of frequency-modulated pulses in the amplified transmit signal 101' to exhibit at least one of the above characteristics 1) and 2). For example, the power regulation circuitry 123 may be configured to modulate a supply voltage of the PA 110 during amplification of the sequence of frequency-modulated pulses in the transmit signal 101 to cause the sequence of frequency-modulated pulses in the amplified transmit signal 101' to exhibit at least one of the above characteristics 1) and 2).

The output power level of the PA 110 and, hence, the amplitude of the signal output by the PA 110 is (directly) proportional to the amount of electrical power 105 provided to the PA 110. Accordingly, by regulating or varying the amount of electrical power 105 provided to the PA 110, the amplitudes of the pulses in sequence of frequency-modulated pulses in the transmit signal 101 may be modulated such that the sequence of frequency-modulated pulses in the amplified transmit signal 101' exhibits at least one of the above characteristics 1) and 2).

For example, the control circuitry 120 may comprise another memory 124 configured to store digital values representative of power profiles for the electrical power 105 provided to the PA 110 during amplification of the sequence of frequency-modulated pulses in the transmit signal 101. The power profiles represent a target progression or variation of the amount of electrical power 105 provided to the PA 110 over time during amplification of the sequence of frequency-modulated pulses in the transmit signal 101. The memory 124 may be configured to store a plurality of different sets of power profiles for different target amplitude modulations of the sequence of frequency-modulated pulses in the transmit signal 101.

According to examples, the memory 124 may be a RAM and the power profiles may be target supply voltages for the PA 110. The power regulation circuitry 123 may, e.g., comprise a DC-to-DC converter (e.g., a Buck converter) or a Low-DropOut (LDO) regulator generating the supply voltage for the PA 110 and a controller configured to control the DC-to-DC converter based on the target supply voltages. However, it is to be noted that the present disclosure is not limited to the aforementioned implementation of the memory 124 and the power regulation circuitry 123. Other types of memories and circuitry for converting digital values into analog power supply signals may be used instead.

According to examples, the control circuitry 110 may be configured to either drive the gain of the PA 110 or regulate the amount of electrical power provided to the PA 110 during the amplification of said sequence of frequency-modulated pulses in the transmit signal 101 to cause said sequence of frequency-modulated pulses in the amplified transmit signal 101' to exhibit at least one of the above characteristics 1) and 2).

In alternative examples, the control circuitry 110 may be configured to both drive the gain of the PA 110 and regulate the amount of electrical power provided to the PA 110 during the amplification of said sequence of frequency-modulated pulses in the transmit signal 101 to cause said sequence of frequency-modulated pulses in the amplified transmit signal 101' to exhibit at least one of the above characteristics 1) and 2). In particular, the control circuitry 110 may be configured to simultaneously drive the gain of the PA 110 and regulate the amount of electrical power provided to the PA 110 during the amplification of said sequence of frequency-modulated pulses in the transmit signal 101 to cause said sequence of frequency-modulated pulses in the amplified transmit signal 101' to exhibit at least one of the above characteristics 1) and 2). For example, the control circuitry 110 may be configured to synchronize operation of the driving circuitry 122 and the power regulation circuitry 123.

In some examples, the power regulation circuitry 123 may be provided in a first Integrated Circuit (IC) separate from a second IC into which the remaining elements of the FMCW radar device 100 are integrated. For example, the power regulation circuitry 123 may be integrated into a Power Management Integrated Circuit (PMIC) coupled to a Monolithic Microwave Integrated Circuit (MMIC) comprising the remaining elements of the FMCW radar device 100. The memory 124 may be integrated into either the PMIC or the MMIC. In alternative examples, all elements of the FMCW radar device 100 may be integrated into a single (i.e., the same) IC.

As indicated above, a large portion of the radar signals at the beginning and at the end of the radar signals is discarded in conventional FMCW radar by performing one-dimensional, two-dimensional or three-dimensional windowing on the digital data generated from the received reflections of the transmit signal. This is done to reduce spectral leakage, improve dynamic range, increase estimation accuracy, enhance target detection, etc. A similar effect may be achieved with the proposed technique by directly modulating the amplitudes of the frequency-modulated pulses with the PA 110. **Fig.** 3 illustrates an exemplary power distribution in a range-Doppler representation 300 (also known as "range-velocity representation", "range-Doppler map" or "range-Doppler image") derived from the received reflections 102 of the amplified transmit signal 101' without windowing the digital data generated from the received reflections 102 of the amplified transmit signal 101'.

The power distribution in the range-Doppler representation 300 is similar to power distributions generated in conventional FMCW radar based on windowed data. However, unlike conventional FMCW radar, the proposed technology allows to achieve such a beneficial power distribution with significantly reduced power consumption of the PA 110, reduced heat generation of the PA 110 and reduced transients from the power supply for the PA 110.

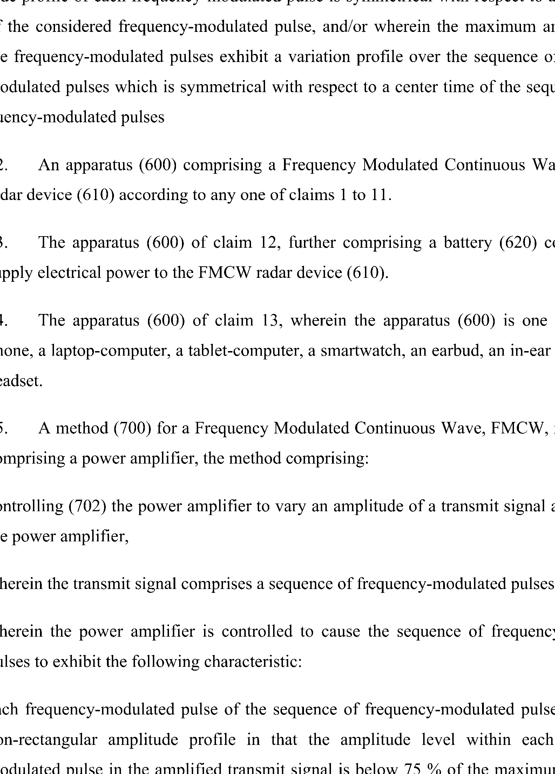

The range-Doppler representation 300 is example of two-dimensional data structure where range values are arranged into a fast time over slow time matrix. However, the proposed technology may further be used for FMCW radar devices for generating radar data for three-dimensional data structures. An exemplary FMCW radar device 400 is illustrated in **Fig. 4****.** The FMCW radar device 400 is based on the FMCW radar device 100 described above. In the following only the differences between the FMCW radar devices 100 and 400 will be described.

In comparison to the FMCW radar device 100, the FMCW radar device 400 further comprises another (a second) PA 160. For example, the PA 110 may be part of a first transmit path of the FMCW radar device 400 and the PA 160 may be part of a (separate, different) second transmit path of the FMCW radar device 400.

The PA 160 is configured to receive and amplify another (a second) transmit signal 106. Analogously to the transmit signal 101 described above, the other transmit signal 106 is an FMCW signal comprising another sequence of frequency-modulated pulses. The frequency-modulated pulses of the other transmit signal 106 may be rectangular pulses of identical amplitude. The other transmit signal 106 may, e.g., be generated by further components of the FMCW radar device 100's - analogously to what is described above for the transmit signal 101. The transmit signal 101 and the other transmit signal 106 may, e.g., be phase-shifted with respect to each other. The carrier frequencies of the transmit signal 101 and the other transmit signal 106 may be identical to each other. The amplified transmit signal output by the PA 160 is labeled with the reference sign 106'-1. The amplified transmit signal 106'-1 may be radiated to the environment by another transmit antenna 170 coupled to the PA 160.

The control circuitry 120 is further coupled to the PA 160 and configured to control operation of the PA 160 analogously to the control of the PA 110. That is, the control circuitry 120 is configured to control the PA 160 to vary an amplitude of the other transmit signal 106 during amplification of the other transmit signal 106. The control circuitry 120 is configured to control the PA 160 to cause the other sequence of frequency-modulated pulses to exhibit at least one of the following characteristics in the amplified transmit signal 106' output by the PA 160:
A) each frequency-modulated pulse of the other sequence of frequency-modulated pulses exhibits a non-rectangular amplitude profile; and
B) the respective maximum amplitudes of the frequency-modulated pulses vary over the other sequence of frequency-modulated pulses.

The amplitude variations caused by the PAs 110 and 160 may be identical or may be different from each other. In other words, the control circuitry 120 may be configured to control the PA 110 and the PA 160 to vary the amplitude of the transmit signal 101 and the amplitude of the transmit signal 106 identically or differently. The control circuitry 120 may be configured to control the variation of the amplitudes of the transmit signals 101 and 106 by the PAs 110 and 160 separately (i.e., independently) for each of the PAs. For example, the control circuitry 120 may be configured to separately drive the gains of the PAs 110 and 160 during amplification of the transmit signals 101 and 106. Additionally or alternatively, the control circuitry 120 may be configured to separately regulate the amounts of electrical power provided to the PAs 110 and 160 during amplification of the transmit signals 101 and 106.

As indicated in Fig. 4, the FMCW radar device 400 may optionally comprise further PAs for amplification and amplitude modulation of further transmit signals (e.g., phase shifted with respect to the transmit signals 101 and 106). For example, if the FMCW radar device 400 comprises M ≥ 2 transmit paths, each of the transmit paths may comprise a PA like the PAs 110 and 160 for amplification and amplitude modulation of a respective transmit signal generated by other elements (circuitry) of the respective transmit path. The control circuitry 120 controls the PAs according to the proposed technique.

Similar, the radar device 400 may comprise more than one receive path (i.e., one or more additional receive circuitries).

It is to be noted that windowing may be omitted at the received side due to the proposed pulse shaping at the transmit side in some examples. However, the present disclosure is not limited thereto. In other examples, windowing may be used at the receive side (e.g., like in conventional FMCW radar).

FMCW radar devices according to the proposed technology may be used for various applications. Accordingly, the present technology further relates to apparatuses comprising a FMCW radar device as described herein. The apparatus may, e.g., be a vehicle such as a car, a truck or a motorcycle. In other examples, the apparatus may be a consumer product such as, e.g., one of a mobile phone, a laptop-computer, a tablet-computer, a smartwatch, an earbud, an in-ear phone and a headset. In particular, the apparatus may be a battery-powered apparatus. In other words, the apparatus may comprise a battery configured to supply electrical power to the FMCW radar device and optionally further elements or devices of the apparatus. FMCW radar devices according to the proposed technology may also be used for other applications such as home appliances or (smart) toilets. In other words, the apparatus may be a home appliance or a (smart) toilet according to examples of the present disclosure.

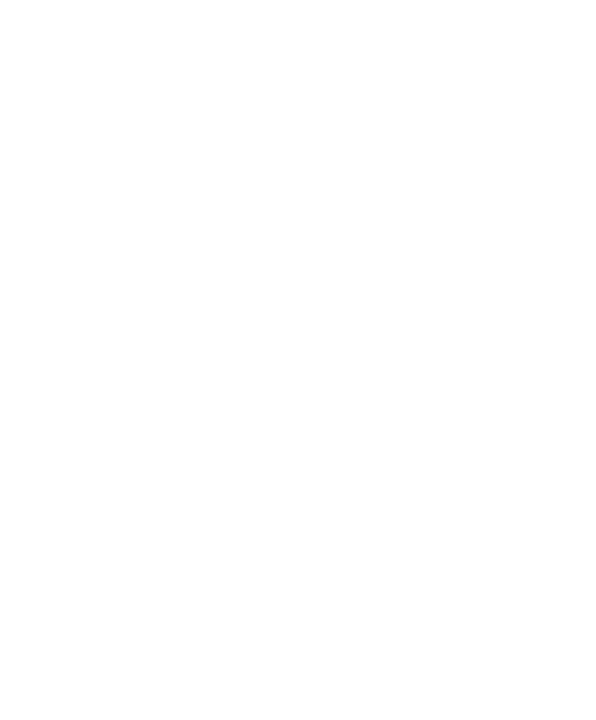

A mobile phone 500 comprising a FMCW radar device 510 as described herein (e.g., one of the FMCW radar devices 100 and 400 described above) and a battery 520 configured to supply electrical power to the FMCW radar device 510 and optionally further elements of the mobile phone 500 is illustrated in **Fig. 5** as an example for an apparatus comprising a FMCW radar device according to the proposed technology. As the power consumption of the FMCW radar device 510's PA(s) is significantly reduced compared to conventional FMCW radar, a lifetime of the battery 520 may be extended. Furthermore, the mobile phone 500 benefits from the reduced heat generation of the FMCW radar device 510's PA(s) as the cooling infrastructure of the mobile phone 500 needs to dissipate less heat. The foregoing benefits apply mutatis mutandis to other battery-powered apparatuses using an FMCW radar device according to the proposed technology.

For further highlighting the pulse shaping for FMCW radar described above, **Fig. 6** illustrates a flowchart of a method 600 for a FMCW radar device comprising a PA. The method 600 comprises controlling 602 the PA to vary an amplitude of a transmit signal amplified by the PA. The transmit signal comprises a sequence of frequency-modulated pulses. The PA is controlled to cause the sequence of frequency-modulated pulses to exhibit at least one of the following characteristics:
1) each pulse of the sequence of frequency-modulated pulses exhibits a non-rectangular amplitude profile; and
2) the respective maximum amplitudes of the pulses vary over the sequence of frequency-modulated pulses.

Analogously to what is described above, the method 600 provides improved FMCW radar. In particular, the method 600 allows reduce the power consumption of the PA, reduce the heat generation by the PA and reduce power supply transients due to softer on/off switching.

More details and aspects of the method 600 are explained in connection with the proposed technique or one or more examples described above (e.g., Fig. 1 to Fig. 5). The method 700 may comprise one or more additional optional features corresponding to one or more aspects of the proposed technique or one or more examples described above.

The proposed technique provides FMCW amplitude pulse shaping.

The examples described herein may be summarized as follows:
An example (e.g., example 1) relates to a FMCW radar device. The FMCW radar device comprises a PA configured to amplify a transmit signal comprising a sequence of frequency-modulated pulses. Additionally, the FMCW radar device comprises control circuitry configured to control the PA to vary an amplitude of the transmit signal. The control circuitry is configured to control the PA to cause the sequence of frequency-modulated pulses to exhibit at least one of the following characteristics: each frequency-modulated pulse of the sequence of frequency-modulated pulses exhibits a non-rectangular amplitude profile; and the respective maximum amplitudes of the frequency-modulated pulses vary over the sequence of frequency-modulated pulses.

Another example (e.g., example 2) relates to a previous example (e.g., example 1) or to any other example, wherein the control circuitry is configured to drive a gain of the PA to cause the sequence of frequency-modulated pulses to exhibit at least one of said characteristics.

Another example (e.g., example 3) relates to a previous example (e.g., example 2) or to any other example, wherein the control circuitry comprises a memory configured to store digital values representative of gain profiles of the gain of the PA during amplification of the sequence of frequency-modulated pulses, and driving circuitry configured to generate a driving signal for driving the gain of the PA based on said digital values.

Another example (e.g., example 4) relates to a previous example (e.g., one of the examples 1 to 3) or to any other example, wherein the control circuitry comprises power regulation circuitry configured to regulate an amount of electrical power provided to the PA during amplification of the sequence of frequency-modulated pulses to cause the sequence of frequency-modulated pulses to exhibit at least one of said characteristics.

Another example (e.g., example 5) relates to a previous example (e.g., example 4) or to any other example, wherein the control circuitry is configured to simultaneously drive the gain of the PA and regulate the amount of electrical power provided to the PA during amplification of said sequence of frequency-modulated pulses to cause said sequence of frequency-modulated pulses to exhibit at least one of said characteristics.

Another example (e.g., example 6) relates to a previous example (e.g., one of the examples 1 to 5) or to any other example, wherein the sequence of frequency-modulated pulses is part of a frame of the transmit signal.

Another example (e.g., example 7) relates to a previous example (e.g., one of the examples 1 to 6) or to any other example, further comprising receive circuitry configured to generate receive data based on received reflections of the transmit signal.

Another example (e.g., example 8) relates to a previous example (e.g., one of the examples 1 to 7) or to any other example, further comprising another PA configured to amplify another transmit signal comprising another sequence of frequency-modulated pulses, wherein the control circuitry is configured to control the other PA to vary an amplitude of the other transmit signal, wherein the control circuitry is configured to control the other PA to cause the other sequence of frequency-modulated pulses to exhibit at least one of the following characteristics: each frequency-modulated pulse of the other sequence of frequency-modulated pulses exhibits a non-rectangular amplitude profile, and the respective maximum amplitudes of the frequency-modulated pulses vary over the other sequence of frequency-modulated pulses.

Another example (e.g., example 9) relates to a previous example (e.g., example 8) or to any other example, wherein the control circuitry is configured to control the power amplifier and the other PA to vary the amplitude of the other transmit signal and the amplitude of the transmit signal identically.

Another example (e.g., example 10) relates to a previous example (e.g., example 8) or to any other example, wherein the control circuitry is configured to control the power amplifier and the other PA to vary the amplitude of the other transmit signal and the amplitude of the transmit signal differently.

Another example (e.g., example 11) relates to a previous example (e.g., one of the examples 1 to 10) or to any other example, wherein the amplitude profile of each frequency-modulated pulse is symmetrical with respect to a center time of the considered frequency-modulated pulse, and/or wherein the maximum amplitudes of the frequency-modulated pulses exhibit a variation profile over the sequence of frequency-modulated pulses which is symmetrical with respect to a center time of the sequence of frequency-modulated pulses

Another example (e.g., example 12) relates to an apparatus comprising a FMCW radar device according to a previous example (e.g., one of the examples 1 to 11) or to any other example.

Another example (e.g., example 13) relates to a previous example (e.g., example 12) or to any other example, further comprising a battery configured to supply electrical power to the FMCW radar device.

Another example (e.g., example 14) relates to a previous example (e.g., example 13) or to any other example, wherein the apparatus is one of a mobile phone, a laptop-computer, a tablet-computer, a smartwatch, an earbud, an in-ear phone and a headset.

An example (e.g., example 15) relates to a method for a Frequency Modulated Continuous Wave, FMCW, radar device comprising a PA, the method comprising controlling the PA to vary an amplitude of a transmit signal amplified by the PA, wherein the transmit signal comprises a sequence of frequency-modulated pulses, and wherein the PA is controlled to cause the sequence of frequency-modulated pulses to exhibit at least one of the following characteristics each frequency-modulated pulse of the sequence of frequency-modulated pulses exhibits a non-rectangular amplitude profile, and the respective maximum amplitudes of the frequency-modulated pulses vary over the sequence of frequency-modulated pulses.

Another example (e.g., example 16) relates to a non-transitory machine-readable medium having stored thereon a program having a program code for performing the method according to example 15, when the program is executed on a processor or a programmable hardware.

Another example (e.g., example 17) relates to a program having a program code for performing the method according to example 15, when the program is executed on a processor or a programmable hardware.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several substeps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A Frequency Modulated Continuous Wave, FMCW, radar device (100, 400), comprising:
a power amplifier (110) configured to amplify a transmit signal (101) comprising a sequence of frequency-modulated pulses; and
control circuitry (120) configured to control the power amplifier (110) to vary an amplitude of the transmit signal (101), wherein the control circuitry (120) is configured to control the power amplifier (110) to cause the sequence of frequency-modulated pulses to exhibit at least one of the following characteristics:
each frequency-modulated pulse of the sequence of frequency-modulated pulses exhibits a non-rectangular amplitude profile; and
the respective maximum amplitudes of the frequency-modulated pulses vary over the sequence of frequency-modulated pulses.

2. The FMCW radar device (100, 400) of claim 1, wherein the control circuitry (120) is configured to drive a gain of the power amplifier (110) to cause the sequence of frequency-modulated pulses to exhibit at least one of said characteristics.

3. The FMCW radar device (100, 400) of claim 2, wherein the control circuitry (120) comprises:
a memory (121) configured to store digital values representative of gain profiles of the gain of the power amplifier (110) during amplification of the sequence of frequency-modulated pulses; and
driving circuitry (122) configured to generate a driving signal (104) for driving the gain of the power amplifier (110) based on said digital values.

4. The FMCW radar device (100, 400) of any one of claims 1 to 3, wherein the control circuitry (120) comprises power regulation circuitry (123) configured to regulate an amount of electrical power (105) provided to the power amplifier (110) during amplification of the sequence of frequency-modulated pulses to cause the sequence of frequency-modulated pulses to exhibit at least one of said characteristics.

5. The FMCW radar device (100, 400) of claim 4 when dependent on one of claims 2 and 3, wherein the control circuitry (120) is configured to simultaneously drive the gain of the power amplifier (110) and regulate the amount of electrical power (105) provided to the power amplifier (110) during amplification of said sequence of frequency-modulated pulses to cause said sequence of frequency-modulated pulses to exhibit at least one of said characteristics.

6. The FMCW radar device (100, 400) of any one of claims 1 to 5, wherein the sequence of frequency-modulated pulses is part of a frame of the transmit signal (101).

7. The FMCW radar device (100, 400) of any one of claims 1 to 6, further comprising:
receive circuitry configured to generate receive data based on received reflections (102) of the transmit signal (101').

8. The FMCW radar device (400) of any one of claims 1 to 7, further comprising another power amplifier (160) configured to amplify another transmit signal (106) comprising another sequence of frequency-modulated pulses, wherein the control circuitry (120) is configured to control the other power amplifier (160) to vary an amplitude of the other transmit signal (106), wherein the control circuitry (120) is configured to control the other power amplifier (160) to cause the other sequence of frequency-modulated pulses to exhibit at least one of the following characteristics:
each frequency-modulated pulse of the other sequence of frequency-modulated pulses exhibits a non-rectangular amplitude profile; and
the respective maximum amplitudes of the frequency-modulated pulses vary over the other sequence of frequency-modulated pulses.

9. The FMCW radar device (400) of claim 8, wherein the control circuitry (120) is configured to control the power amplifier (110) and the other power amplifier (160) to vary the amplitude of the other transmit signal (106) and the amplitude of the transmit signal (101) identically.

10. The FMCW radar device (400) of claim 8, wherein the control circuitry (120) is configured to control the power amplifier (110) and the other power amplifier (160) to vary the amplitude of the other transmit signal (106) and the amplitude of the transmit signal (101) differently.

11. The FMCW radar device (100, 400) of any one of claims 1 to 10, wherein the amplitude profile of each frequency-modulated pulse is symmetrical with respect to a center time of the considered frequency-modulated pulse, and/or wherein the maximum amplitudes of the frequency-modulated pulses exhibit a variation profile over the sequence of frequency-modulated pulses which is symmetrical with respect to a center time of the sequence of frequency-modulated pulses

12. An apparatus (600) comprising a Frequency Modulated Continuous Wave, FMCW, radar device (610) according to any one of claims 1 to 11.

13. The apparatus (600) of claim 12, further comprising a battery (620) configured to supply electrical power to the FMCW radar device (610).

14. The apparatus (600) of claim 13, wherein the apparatus (600) is one of a mobile phone, a laptop-computer, a tablet-computer, a smartwatch, an earbud, an in-ear phone and a headset.

15. A method (700) for a Frequency Modulated Continuous Wave, FMCW, radar device comprising a power amplifier, the method comprising:
controlling (702) the power amplifier to vary an amplitude of a transmit signal amplified by the power amplifier,
wherein the transmit signal comprises a sequence of frequency-modulated pulses, and
wherein the power amplifier is controlled to cause the sequence of frequency-modulated pulses to exhibit at least one of the following characteristics:
each frequency-modulated pulse of the sequence of frequency-modulated pulses exhibits a non-rectangular amplitude profile; and
the respective maximum amplitudes of the frequency-modulated pulses vary over the sequence of frequency-modulated pulses.

## Amended claims

### Amended claims in accordance with Rule 137(2) EPC.

1. A Frequency Modulated Continuous Wave, FMCW, radar device (100, 400), comprising:
a power amplifier (110) configured to amplify a transmit signal (101) comprising a sequence of frequency-modulated pulses; and
control circuitry (120) configured to control the power amplifier (110) to vary an amplitude of the transmit signal (101), wherein the control circuitry (120) is configured to control the power amplifier (110) to cause the sequence of frequency-modulated pulses to exhibit the following characteristic:
each frequency-modulated pulse of the sequence of frequency-modulated pulses exhibits a non-rectangular amplitude profile in that the amplitude level within each frequency-modulated pulse in the amplified transmit signal (101'-1) is below 75 % of the maximum amplitude of the frequency-modulated pulse for at least 10% of the duration of the frequency-modulated pulse.

2. The FMCW radar device (100, 400) of claim 1, wherein the control circuitry (120) is configured to drive a gain of the power amplifier (110) to cause the sequence of frequency-modulated pulses to exhibit said characteristic.

3. The FMCW radar device (100, 400) of claim 2, wherein the control circuitry (120) comprises:
a memory (121) configured to store digital values representative of gain profiles of the gain of the power amplifier (110) during amplification of the sequence of frequency-modulated pulses; and
driving circuitry (122) configured to generate a driving signal (104) for driving the gain of the power amplifier (110) based on said digital values.

4. The FMCW radar device (100, 400) of any one of claims 1 to 3, wherein the control circuitry (120) comprises power regulation circuitry (123) configured to regulate an amount of electrical power (105) provided to the power amplifier (110) during amplification of the sequence of frequency-modulated pulses to cause the sequence of frequency-modulated pulses to exhibit said characteristic.

5. The FMCW radar device (100, 400) of claim 4 when dependent on one of claims 2 and 3, wherein the control circuitry (120) is configured to simultaneously drive the gain of the power amplifier (110) and regulate the amount of electrical power (105) provided to the power amplifier (110) during amplification of said sequence of frequency-modulated pulses to cause said sequence of frequency-modulated pulses to exhibit said characteristic.

6. The FMCW radar device (100, 400) of any one of claims 1 to 5, wherein the sequence of frequency-modulated pulses is part of a frame of the transmit signal (101).

7. The FMCW radar device (100, 400) of any one of claims 1 to 6, further comprising:
receive circuitry configured to generate receive data based on received reflections (102) of the transmit signal (101').

8. The FMCW radar device (400) of any one of claims 1 to 7, further comprising another power amplifier (160) configured to amplify another transmit signal (106) comprising another sequence of frequency-modulated pulses, wherein the control circuitry (120) is configured to control the other power amplifier (160) to vary an amplitude of the other transmit signal (106), wherein the control circuitry (120) is configured to control the other power amplifier (160) to cause the other sequence of frequency-modulated pulses to exhibit at least one of the following characteristics:
each frequency-modulated pulse of the other sequence of frequency-modulated pulses exhibits a non-rectangular amplitude profile; and
the respective maximum amplitudes of the frequency-modulated pulses vary over the other sequence of frequency-modulated pulses.

9. The FMCW radar device (400) of claim 8, wherein the control circuitry (120) is configured to control the power amplifier (110) and the other power amplifier (160) to vary the amplitude of the other transmit signal (106) and the amplitude of the transmit signal (101) identically.

10. The FMCW radar device (400) of claim 8, wherein the control circuitry (120) is configured to control the power amplifier (110) and the other power amplifier (160) to vary the amplitude of the other transmit signal (106) and the amplitude of the transmit signal (101) differently.

11. The FMCW radar device (100, 400) of any one of claims 1 to 10, wherein the amplitude profile of each frequency-modulated pulse is symmetrical with respect to a center time of the considered frequency-modulated pulse, and/or wherein the maximum amplitudes of the frequency-modulated pulses exhibit a variation profile over the sequence of frequency-modulated pulses which is symmetrical with respect to a center time of the sequence of frequency-modulated pulses

12. An apparatus (600) comprising a Frequency Modulated Continuous Wave, FMCW, radar device (610) according to any one of claims 1 to 11.

13. The apparatus (600) of claim 12, further comprising a battery (620) configured to supply electrical power to the FMCW radar device (610).

14. The apparatus (600) of claim 13, wherein the apparatus (600) is one of a mobile phone, a laptop-computer, a tablet-computer, a smartwatch, an earbud, an in-ear phone and a headset.

15. A method (700) for a Frequency Modulated Continuous Wave, FMCW, radar device comprising a power amplifier, the method comprising:
controlling (702) the power amplifier to vary an amplitude of a transmit signal amplified by the power amplifier,
wherein the transmit signal comprises a sequence of frequency-modulated pulses, and
wherein the power amplifier is controlled to cause the sequence of frequency-modulated pulses to exhibit the following characteristic: each frequency-modulated pulse of the sequence of frequency-modulated pulses exhibits a non-rectangular amplitude profile in that the amplitude level within each frequency-modulated pulse in the amplified transmit signal is below 75 % of the maximum amplitude of the frequency-modulated pulse for at least 10% of the duration of the frequency-modulated pulse.
